# EUROPEAN PATENT SPECIFICATION

(11) **EP 1 908 610 B1**
(45) Date of publication and mention of the grant of the patent: **21.04.2010**
(21) Application number: 06767263.4
(22) Date of filing: 23.06.2006
(51) Int. Cl.: B60C 9/18, B29C 33/02, B29C 35/16, B29D 30/06, B60C 9/20, B60C 9/22

(54) **FLAT PNEUMATIC RADIAL TIRE FOR HEAVY DUTY AND METHOD OF MANUFACTURING THE SAME**
FLACHER HOCHLEISTUNGS-RADIALLUFTREIFEN UND HERSTELLUNGSVERFAHREN DAFÜR
PNEUMATIQUE RADIAL PLAT POUR FORTES CHARGES ET SON PROCÉDÉ DE FABRICATION

(30) Priority: 23.06.2005 JP 2005182931; 10.08.2005 JP 2005232400
(43) Date of publication of application: 09.04.2008
(73) Proprietor: The Yokohama Rubber Co., Ltd., Minato-ku Tokyo 105-8685 (JP)
(72) Inventor: KABE, Kazuyuki, The Yokohama Rubber Co., Ltd., Hiratsuka-shi, Kanagawa 254-8601 (JP); ITOH, Takehiko, The Yokohama Rubber Co., Ltd., Hiratsuka-shi, Kanagawa 254-8601 (JP); ISOBE, Tetsu, The Yokohama Rubber Co., Ltd., Hiratsuka-shi, Kanagawa 254-8601 (JP); OGAWA, Yukihiro, The Yokohama Rubber Co., Ltd., Hiratsuka-shi, Kanagawa 254-8601 (JP)
(74) Representative: HOFFMANN EITLE
(86) International application number: PCT/JP2006/312646
(87) International publication number: WO 2006/137536

(56) References cited:
- WO-A-01/28761
- WO-A-2006/070533
- JP-A- 03 104 706
- JP-A- 03 208 703
- JP-A- 08 142 601
- JP-A- 09 183 302
- JP-A- 09 193 159
- JP-A- 63 264 307
- JP-A- 2000 203 215
- JP-A- 2001 063 315
- JP-A- 2001 191 727
- US-B1- 6 619 357

## Description

The present invention relates to a flat heavy-duty pneumatic radial tire and a method of manufacturing the same. More specifically, embodiments of the present invention relates to a flat heavy-duty pneumatic radial tire with further improved durability and partial-wear resistance as well as an enhanced driving stability, and to a method of manufacturing the same.

In recent years, not only pneumatic radial tires for passenger cars but also pneumatic radial tires for heavy duty are constructed flat with an increasingly lower profile, and the number of ultra-flat tires with an aspect ratio of 60% or less is on rise. In the Japanese market, ultra-flat pneumatic radial tires for heavy duty started particularly with low-floor buses, and are now widely used. A problem to be solved for the purpose of causing such ultra-flat radial tires to produce their full running performances is how to make their wide treads evenly contact road surfaces. That is because, if the treads unevenly contact the road surfaces, this brings about a problem that the durability and partial-wear resistances of the tires are deteriorated.

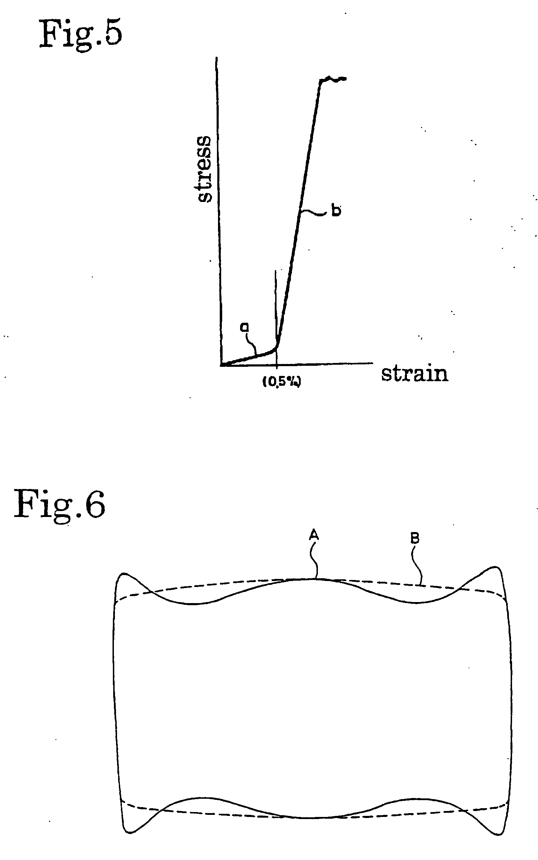

A contact shape to the ground by a flat heavy-duty pneumatic radial tire is largely influenced by a configuration of the belt layers imbedded in the tread. In a case of a conventional type of radial tires for general use, a cord angle of each of steel cords in each of the belt layers to the tire circumferential direction of the tire is biased at an angle of approximately 15 to 60°. In addition, the steel cords are oriented so as to cross over between the adjacent belt layers. Nevertheless, in a case where belt layers with this kind of the bias structure are applied to a flat radial tire as they are, the flat radial tire decreases its circumferential rigidity at the edge portions of the belt layers because the belt layers are wide, and the resultant contact shape to the ground of the tire becomes extremely swollen in its shoulder edge portions, like a shape indicated by a solid line A in Fig. 6. In addition, because the interlayer shearing stress increases in the edge portions of the belt layers in the flat radial tire, a delamination failure occurs at the edges, and accordingly leads to decrease in the durability of the tire, causing partial-wear of the tire.

Many proposals (Patent Document 1 and the like) have been so far made on measures against the foregoing problems with flat radial tires, and the proposals are that the circumferential rigidity is increased by inserting what is termed as a 0-degree belt layer in the belt layers each with the bias structure. The 0-degree belt layer is a belt layer in which the steel cords are arranged at an angle of substantially 0 deg. to the circumferential direction of the tire. For example, in the case of a flat radial tire for heavy duty as recited in Patent Document 1, a 0-degree belt layer, which has been described above, is inserted in the interstice between two belt layers with a bias structure in which steel cords are arranged at a cord angle of 10 to 45 deg. to the circumferential direction of the tire. The "0-degree belt layer" is narrower than the two belt layers with the bias structure. In addition, a thin rubber layer is interposed between the end portions of the respective belt layers with the bias structure on their two sides.

The flat radial tire for heavy duty in which the 0-degree belt layer is inserted in the interstice between the two belt layers with the bias structure in this manner apparently demonstrates its effect that it has improved durability and partial-wear resistance in comparison with a conventional type of tire having the belt layers with the bias structure only. However, the effect concerning the acquired durability and partial-wear resistance does not necessarily reach a satisfactory level, and a further improvement is awaited.

The steel cords of the 0-degree belt layer are arranged to extend substantial in the circumferential direction of the tire. Judging from a viewpoint of a method of manufacturing a tire, if inextensible steel cords which are similar to those used for a regular type of belt layers with the bias structure are used as the steel cords for the 0-degree belt layer, the inextensible steel cords make it impossible to lift a tread part because of restraint force of the steel cords even though the tread part is intended to be pressed against the inner surface of a mold by inflating the uncured tire inside the mold. For this reason, for the purpose of enabling the tread part to be lifted, steel cords having a property of a non-linear stress-strain relationship are used as the steel cords for the 0-degree belt layer. The steel cords having the non-linear stress-strain relationship is extensible at the initial stage when the steel cords start to be stretched, because the steel cords are produced, for example, with an open structure, or a structure provided wit a lot of twists.

In the case of this type of steel cords having the non-linear stress-strain relationship, however, it is likely that some extensible parts in the steel cords are not fully extended when stretched, and remain yet not to be extended, even after the steel cords are made in cure. For this reason, when a cured tire is filled with an internal pressure, the external shape of the tire grows larger than its design dimensions, and this overgrowth leads to decrease in the durability of the tire and deterioration of the driving stability of the tire.

Patent Document 1: Japanese patent application Kokai publication No. 2001-522748.

United States patent publication no. US 6619357, corresponding with the preamble of claim 1, discloses a truck tire including belt plies. Japanese patent application no. JP 2000 2-03215 discloses a pneumatic radial tire comprising a radial carcass, a cross belt comprised of at lest two belt layers and a belt reinforcing member including at least one reinforcing layer. International patent application publication no. WO2006/070533 discloses a pneumatic tire including belt plies of a belt layer under a tread portion. International patent application publication no. WO 01/28761 discloses a process of manufacturing a pneumatic tire including belts disposed between a carcass and a tread. None of these publications discloses a tire having a protection belt layer made of steel cords arranged on the outer periphery of belt bias layers of the tire, wherein the protection belt layer has a cord angle of 15° to 30°to the circumferential direction of the tire.

It is thus desirable to provide a flat heavy-duty pneumatic radial tire including a 0-degree belt layer made of steel cords, which tire is capable of further improving its durability and partial-wear resistance, as well as its driving stability, and to provide a method of manufacturing the same.

In a first aspect, the invention provides a flat heavy-duty pneumatic radial tire, comprising: at least one ply of a carcass layer made of steel cords; and multiple plies of steel cord belt layers arranged on the outer periphery of the carcass layer, wherein the steel cord belt layers comprises: at least one ply of a 0-degree belt layer, which is arranged immediately on the carcass layer and made of steel cords having a non-linear stress-strain relationship, an angle of the steel cords to the circumferential direction of the tire being substantially 0°; and at least two plies of bias belt layers, which are arranged on the outer periphery of the 0-degree belt layer at a cord angle to the circumferential direction of the tire of substantially equal to an equilibrium angle within a range of 45° to 65°, characterised by a protection belt layer made of steel cords arranged on the outer periphery of the bias belt layers, in which protection belt layer a cord angle, to the circumferential direction of the tire, is 15° to 30°.

In a second aspect, the invention provides a method of manufacturing a flat heavy-duty pneumatic radial tire, comprising: forming an uncured tire including: at least one ply of a carcass layer made of steel cords and multiple plies of steel cord belt layers arranged on the outer periphery of the carcass layer, the steel cord belt layers including at least one ply of a 0-degree belt layer arranged immediately on the carcass layer and made of steel cords having the non-linear stress-strain relationship and arranged at a cord angle to the circumferential direction of the tire of substantially 0°, and at least two plies of bias belt layers arranged on the outer periphery of the 0-degree belt layer, a cord angle to the circumferential direction of the tire being substantially equal to an equilibrium angle within a range of 45° to 65°, and a protection belt layer made of steel cords arranged on the outer periphery of the belt bias layers, in which protection belt layer a cord angle, to the circumferential direction of the tire, is 15° to 30°; curing the uncured tire in a mold; removing the resultant cured tire from the mold; assembling the cured tire with a rim to be inflated while the tire is in high temperature; and cooling the cured tire down to normal temperature in a condition of being inflated.

In order that the invention will be more readily understood, embodiments thereof, given by way of example only, will now be described in relation to the accompanying drawings, and in which:-
Fig. 1 is a meridional cross-sectional view showing a flat heavy-duty pneumatic radial tire according to an embodiment of the present invention;
Fig. 2 is a partial development view showing steel cord belt layers of the tire which is viewed from outside in the radial direction;
Fig. 3 is a meridional cross-sectional view showing a flat heavy-duty pneumatic radial tire outside the scope of claim 1, the tire being assembled with a rim;
Fig. 4 is a partial development view of a steel cord belt layer in the tire shown in Fig. 3, which is viewed from outside in the radial direction;
Fig. 5 is a diagram of a stress-strain relationship of steel cords; and
Fig. 6 is a plan view showing the shape of the contact patch of the flat heavy-duty pneumatic radial tire.

The steel cord belt layers of tires herein described are configured by arranging the 0-degree belt layer with the cord angle being substantially 0° immediately on the outer periphery of the carcass layer, and by arranging the bias belt layers with the cord angle being substantially equal to the equilibrium angle on the 0-degree belt layer. For this reason, the 0-degree belt layer gives a higher stiffness to the tire in the circumferential direction thereof, and thereby evens out the stiffness throughout the tread. Furthermore, the bias belt layers arrange the cord angle to set equal or close to the equilibrium angle (54.7°) on dynamics of a composite material reinforced with cords, and which angle allows virtually no deformation to occur due to a tensile force in the circumferential direction of the tire on the basis of a theory on the equilibrium angle. Accordingly, the bias belt layers make an interlayer shear deformation hardly to occur between the bias belt layers and the 0-degree belt layer, or between the adjacent bias layers. As a result, the interaction between the 0-degree belt layer and the bias belt layers makes it possible to further enhance the durability and partial-wear resistance of the tire.

A protection belt layer, arranged on the outer periphery of the bias belt layers, is made of steel cords which are arranged at an angle of 15° to 30° to the circumferential direction of the tire. Furthermore, it preferable that the width of the 0-degree belt layer is 75% to 85% of the total width of the tire, and also the width of the bias belt layers is narrower than that of the 0-degree belt layer, as well as 60% to 80% of the total width of the tire. Moreover, it is preferable that the width of the protection belt layer is narrower than that of the bias belt layers, as well as 25% to 70% of the total width of the tire.

In a more preferable embodiment of the present invention, two plies of the 0-degree belt layers and two plies of the bias belt layers are arranged, and one ply of the protection belt layer is arranged.

According to manufacturing methods disclosed herein, the uncured tire - including the carcass layer and the belt layers made of steel cords, at least one ply of the belt layers being the 0-degree belt layer - is cured in the mold; thereafter, the tire, which has been removed from the mold, is assembled with a rim to be inflated while the tire is in high temperature; and the resultant tire is cooled down to normal temperature while the tire is being inflated. Accordingly, the post-inflation process stretches out extensible parts of the steel cords in the 0-degree belt layer, which remain in an initial phase of stretching when the tire is cured in the mold, and accordingly makes the steel cords not to have such extensible remaining parts. This restrains the outside diameter of the tire from increasing so much while the tire is being filled with an inner pressure when the tire is in use. This makes it possible to further enhance the durability and driving stability of the tire.

In general, the post-inflation process is that which is used for thermally setting the heat-shrinkable properties of organic fiber cords after curing a pneumatic tire for a passenger car which uses the organic fiber cords having the heat-shrinkable properties. For this reason, the post-inflation process has not been used for a heavy-duty pneumatic tire, in of which both the carcass layer and the belt layers are made of steel cords each having no heat-shrinkable properties. However, the post-inflation process is employed for the purpose of solving the problem of the extensibility remaining in the steel cords of the 0-degree belt layer having a property of the non-linear stress-strain relationship, even after the tire has been cured.

Furthermore, the tire in which all of the carcass layer and the belt layers are constituted of steel cords maintain a large amount of heat even after the tire has been cured. Because of the amount of heat, in general, there occurs a phenomenon in which the tire continues being cured after released from the mold. In the post-inflation process, as described above, the cured tire proceeds with curing under a condition of inflation to hold the shape of the tire substantially the same as that of the mold, in combination with the amount of remaining heat contained peculiarly in the tire in which all of the carcass layer and belt layers are made of steel cords. Accordingly, it is possible for the tire itself to memorize the shape of the mold, and thereby to make the shape of the tire closer to the design dimensions of the shape of the mold. This accordingly makes the tire to further enhance the durability and driving stability.

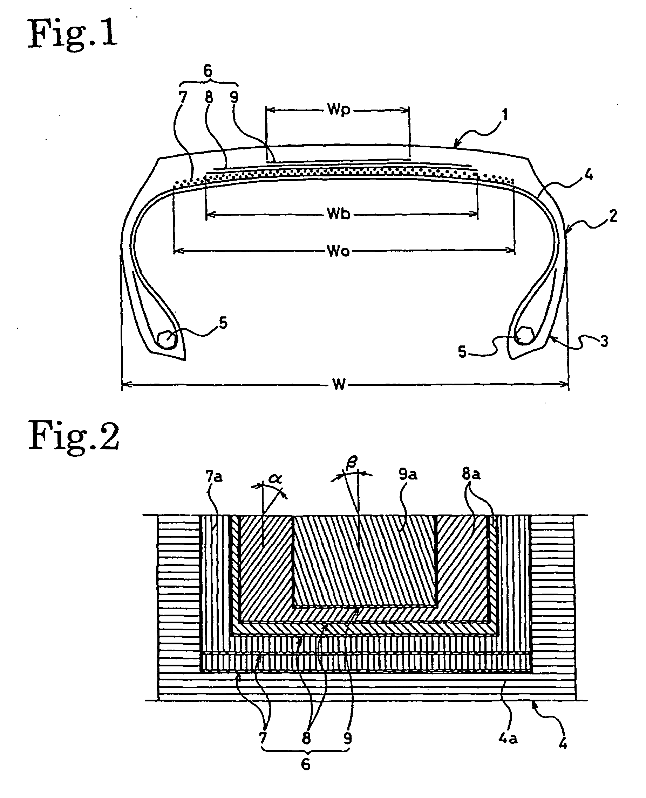

Fig. 1 is a meridional cross-sectional view showing a flat heavy-duty pneumatic radial tire according to an embodiment of the present invention. Fig. 2 is a partial development view showing steel cord belt layers of the tire, viewed from outside the tire in the radial direction. In Figs. 1 and 2, reference numeral 1 denotes a tread part; 2, sidewall parts; 3, bead parts; and 4, a carcass layer. The carcass layer 4 is configured in a way that multiple steel cords 4a are arranged at 90 deg. to the circumferential direction of the tire, and extend from the tread part 1 to the bead part 3 via the sidewall part 2, and both end portions are folded around the bead cores 5 and 5 from inside to outside of the tire, respectively.

In the illustrated example, a single ply of the carcass layer is provided. It should be noted, however, two or more plies of carcass layers may be provided. Steel cords are used for these carcass cords in the carcass layer, and are arranged at a cord angle 90° ± 10° to the circumferential direction of the tire.

Multiple plies of steel belt layers 6 are arranged in the tread part 1 at the outer peripheral side of the carcass layer 4. The steel belt layers 6 according to the present embodiment are comprised of two plies of 0-degree belt layers 7, two plies of bias belt layers 8 and a single ply of a protection belt layer 9 which are layered in order from immediately above the carcass layer 4 to the outer periphery of the tire. Among the belt layers constituting the steel belt layers 6, the 0-degree belt layers 7 have the widest width W₀, which is 75% to 85% of the total width W of the tire. The bias belt layers 8 have the second widest width Wb next to the 0-degree belt layers 7, that is 60% to 80% of the total width W of the tire. The protection belt layer 9 has the narrowest width Wp, which is 25% to 70% of the total width W of the tire.

The 0-degree belt layers 7 arranged at the innermost are formed by winding steel cords 7a immediately around the carcass layer 4 at a cord angle of substantially 0° to the circumferential direction of the tire in parallel to one another. The 0-degree belt layers 7 are formed by winding a rubberized tape consisting of a single steel cord 7a or two to 10 steel cords 7a in the circumferential direction of the tire continuously and spirally. The 0-degree belt layer 7 formed by arranging the steel cords 7a substantially at an angle of 0° to the circumferential direction of the tire give a high stiffness to the circumferential direction of the tire to even off the tread stiffness overall. Accordingly, it makes the shape of the contact patch of the tire square as shown by the broken line B in Fig. 6.

It is sufficient that the 0-degree belt layer 7 is provided with at least one ply. It is desirable, however, that the 0-degree belt layer 7 should be provided with two plies or more as shown in the illustrated example. Two or more plies of the 0-degree belt layers 7 make the tensile force of the steel cords 7a even throughout the tread part, and accordingly even off the shape of the contact patch of the tire in a more favorable manner. No specific restriction is imposed on the upper limit of the numbers of the plies in the 0-degree belt layer 7. From a viewpoint of checking the weight of the tire, it is desirable that the number of the plies in the 0-degree belt layers 7 is not limited, but should be one or two.

It should be noted that the cord angle of the steel cords 7a to the circumferential direction of the tire in the 0-degree belt layer 7 being substantially 0° means that the cord angle is completely 0°, as well as within a range of 0° ± 3°.

In addition, the steel cords used for the 0-degree belt layer 7 have properties different from those used for the bias belt layer 8 and the protection belt layer 9. Steel cords having a linear stress-strain relationship are used for the bias belt layer 8 and the protection belt layer 9, whereas steel cords having the non-linear stress-strain relationship are used for the 0-degree belt layer 7.

In this respect, the non-linear stress-strain relationship is as shown in a stress-strain curve illustrated in Fig. 5. Specifically, the non-linear stress-strain relationship means properties in which the steel cords elongate with their larger rate of change with respect to the stress, as indicated by the straight line a in Fig. 5, when the stress-strain relationship is exhibited in a lower stress range (in the initial phase of stretch), and in which the steel cords elongate with their smaller rate of change with respect to the stress, as indicated by the straight line b in Fig. 5, when the stress-strain relationship is exhibited in an intermediate and higher stress range (in the intermediate and final phases of stretch). These properties can be given to the steel cords by organizing the twisted structure of the steel cords to an open structure, or by increasing the number of twists in the steel cords.

Since the steel cords have the non-linear stress-strain properties as described above, it is possible to lift the tread part smoothly while curing an uncured tire, and to increase the uniformity of the tire. Although it is not particularly limited where a boundary between the lines a and b shown in Fig. 5 should exist in the non-linear stress-strain relationship, it is desirable that the boundary should exist approximately at a strain within 0.5% to 1.0%.

The method of forming the 0-degree belt layer is not specifically limited. It is, however, preferable to form the belt layer by winding the rubberized tape including one to 10 steel cords in the circumferential direction of the tire continuously and spirally.

The bias belt layers 8 arranged at the outer peripheral side of the 0-degree belt layer 7 are formed in a way that steel cords 8a are arranged at a cord angle α of 45° to 65° to the circumferential direction of the tire in parallel to one another. At least two plies of the bias belt layers are arranged, and it is preferable that the steel cords 8a are arranged with a relationship to cross over to the opposite directions each other between the two adjacent layers. The number of plies is not specifically limited. But, it is preferable to arrange two or four plies; more specifically, to arrange two plies.

The cord angle α in the bias belt layer 8 set within the range of 45° to 65° means that the cord angle α of the steel cords 8a is an equilibrium angle or close to the equilibrium angle. According to a theory of dynamics on a composite material reinforced with cords, when a tensile load is applied to the a rubber or plastic composite material reinforced with cords, the composite material is kept in a non-deformation condition not to stretch or shrink to the direction of the applies tensile load, if the reinforcement cords are arranged at an angle of 54.7° to a direction of the applied tensile load. This cord angle (54.7°) which causes the composite material to be kept in the non-deformation condition is termed as an equilibrium angle.

Accordingly, the bias belt layers 8 cause little deformation due to the tensile force in the circumferential direction of the tire. As a result, no shear deformation occurs between the bias belt layers 8 and the adjacent 0-degree belt layer 7, or between the plies in the bias belt layers 8. Accordingly, the 0-degree belt layer 7 increases the stiffness in the circumferential direction of the tire, together with which the shape of the contact patch of the tire is made square as shown by the broken line B in Fig. 6. These effects make large contributions to enhancing the durability and partial-wear resistance of the tire.

The protection belt layer 9 arranged at the outer peripheral side of the bias belt layers 8 is a belt layer in which a cord angle of steel cords 9a to the circumferential direction of the tire is 15° to 30°. This protection belt layer 9 makes contributions to enhancing in-plane bending stiffness of the steel cord belt layer 6, and accordingly makes contributions to further enhancing the effect of preventing partial-wear of the tire. If the cord angle β is not larger than 15°, the inter-layer shearing stress increases to delaminate the edge portions of the belt layers. If the cord angle β exceeds 30°, the effect of the enhanced in-plane stiffness declines.

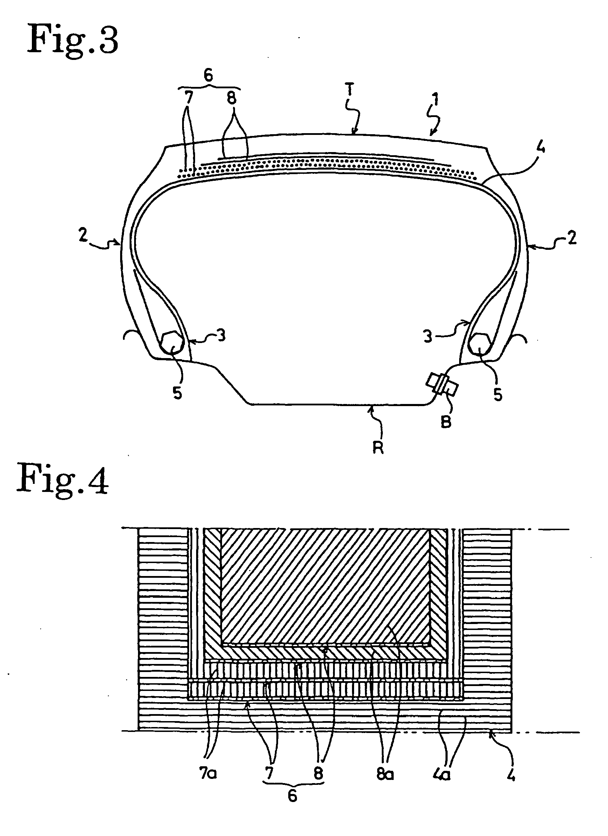

Thus, the flat heavy-duty pneumatic radial tire is provided with the protection belt layer 9. It should be noted, however, that the protection layer 9 may be omitted, in tires and methods outside the scope of claims 1 and 6, according to the capacities required for the tire, as illustrated in Figs. 3 and 4, respectively.

As described above, it is desirable that, in the steel cord belt layer 6 according to embodiments of the present invention, the width W₀ of the 0-degree belt layer 7 should be within the range of 75% to 85% of the total width W of the tire. In addition, it is desirable that the width Wb of the bias belt layer 8 should be narrower than the width W₀ of the 0-degree belt layer 7, and should be within the range of 60% to 80% of the total width W of the tire. Moreover, it is desirable that the width Wp of the protection belt layer 9 should be narrower than the width Wb of the bias belt layer 8, and should be within the range of 25% to 70% of the total width W of the tire. The setting of the width of each of the belt layers within the foregoing range makes it possible to further enhance the durability and partial-wear resistance of the tire.

A method of manufacturing a pneumatic tire is carried out as follows. First of all, an uncured tire is cured in a mold. The uncured tire has the carcass layer made of the steel cords in the foregoing manner as well as the steel cord belt layers provided to the outer periphery of the carcass layer, the belt layers including at least one ply of the 0-degree belt layer configured of the steel cords having the non-linear stress-strain relationship. The steel cord belt layers include at least two plies of the bias belt layers arranged on the outer periphery of the 0-degree belt layer, in addition to the 0-degree belt layer. The bias belt layers are comprised of at least two plies, in each of which plies the cord angle to the circumferential direction of the tire is a substantial equilibrium angle within the range of 45° and 65°. Subsequently, the cured tire is released from the mold after the curing process. While the tire is kept at the high temperature, the tire is quickly assembled to a rim R as in the mode shown in Fig. 3. Thereafter, a compressed air is filled into the tire from a filling valve B until the pressure inside the tire becomes equal to a designed compressed air. Thereby, the tire T is inflated in a state that the tire T becomes a shape equal to, or slightly larger than the dimensions of the mold. Afterward, a post-inflation process is applied to the tire which is cooled down in the atmosphere while inflated until the tire becomes equal to normal temperature.

The application of the post-inflation process makes it possible to fully stretch out parts extensible at the initial phase of stretch which remain in the steel cords in the 0-degree belt layer while the tire is being cured. In other words, the extensible part indicated by the straight line a in the diagram of stress-strain relationship of Fig. 5 is able to be eliminated. As a result, the tire to which the post-inflation process has been applied in this manner grow scarcely its outside diameter when the tire is filled with an air pressure specified in JATMA (the Japanese Automobile Tire Manufactures Association) standards at the time to be used. This makes it possible to enhance the durability and the driving stability of the tire.

The post-inflation process is a technique generally used for a pneumatic tire for passenger car, in which carcass cords are formed of organic fiber cords. The reason why the post-inflation process is applied to the tire is as follows. Since the organic fiber cords are heat-shrinkable, the organic fiber cords shrink to deteriorate the uniformity of the tire, if the tire is left alone to be cooled down after the tire has been removed from the mold after the curing process, the organic fiber cords shrink in the course of being cooled down. So, it needs to restrain the organic fiber cords from thermally shrinking. Against this background, in the conventional practice, the post-inflation process has not been employed for a heavy duty pneumatic tire in which steel cords free of heat-shrinkable properties are used for the carcass layer and the belt layers, because application of the post-inflation process would be completely meaningless.

The post-inflation process is employed to eliminate extensible parts, which remain in the steel cords having the non-linear stress-strain relationship in the 0-degree belt layer when the tire is inflated at the curing in the mold. The application of this post-inflation process to the tire makes it possible to solve problem intrinsic with the 0-degree belt layer, and accordingly enhance the durability and driving stability of the tire.

Particularly, a tire according to an embodiment of the present invention, in which both the carcass layer and the belt layers are composed of steel cords, maintains in itself a large amount of heat immediately after having been cured. For this reason, it is usual that there is a phenomenon in which, due to the amount of heat, the rubber further continues curing even after the tire is released from the mold. In the inflation process a curing step by the amount of remaining heat particular to the tire composed of all-steel cords is carried out in a condition of inflation to maintain a shape of the tire substantially equal to that of the mold as to make memorized in the tire itself. Thereby, it is to make the shape of the tire closer to the designed dimensions represented by the shape of the mold. Accordingly, it is possible to further enhance the durability and driving stability of the tire.

In the post-inflation process, a timing when the tire is assembled with the rim after removed from the mold should be before the temperature of the tire decreases completely to normal temperature. Once the temperature of the tire decreases to normal temperature completely, the effect of eliminating the remaining elongation in the steel cords is not obtained. It is necessary that the tire is assembled with the rim and inflated, while the tire is kept at the high temperature. It is desirable that the lower limit of the temperature at which the tire is assembled with the rim should be not lower than 110°C, preferably 125°C. As a cooling method of cooling down the tire to normal temperature after inflation, it may be any one of a natural cooling method of leaving the tire cooled down and a forced cooling method of blowing a cooling air onto the tire.

The reason why the lower limit of the temperature of the tire should be 110°C is because, if the temperature is lower than 110°C, it is too low relative to the temperature for curing the tire so that the effect brought by the post-inflation process is reduced. The tire which is picked up from the mold after the curing process is completed hot in temperature, particularly, the tire in which both the carcass layer and the belt layers are made of all-steel cords has a large amount of heat, and therefore the rubber continues being cured with the amount of heat containing in the tire itself. Accordingly, if the temperature of the tire at the post-inflation process is lower than 110°C, there reduces the effect of the curing process carried out on the basis of the amount of heat contained in the tire itself. It is more desirable that the temperature of the tire should be not lower than 125 C.

Furthermore, with regard to the post-inflation process, the air pressure to be filled into the tire for the inflation is not restricted in particular as long as it is used to be one of air pressures specified in "Air Pressure-Load Capability Cross Reference" set in "JATMA YEAR BOOK 2004." It is preferable, however, to use an air pressure set up corresponding to the maximum load capability among the air pressures specified there.

Particularly, embodiments of the present invention are capable of exhibiting the most advantageous effect when related to tires with an aspect ratio of not more than 60%.

Examples 1 to 3 and Comparative Examples 1 to 2

Five different flat types of heavy-duty pneumatic radial tires having the same tire size of 435/45R22.5 and composed of steel cord belt layers were produced as Examples 1 to 3, of which Examples 1 and 3 are outside the scope of claims 1 and 6, and Comparative Examples 1 to 2, in which the steel cord belt layers were different from one to another as follows. (It should be noted that a belt layer closest to the carcass layer is called a "first layer," and that the other belt layers are called a "second layer," a "third layer," and so on toward the tread.)

### [0044] (Example 1)

**First Layer (0-degree Belt Layer)**

| | |
|---|---|
| Belt Width: | 75% of the tire total width W |
| Cord Angle: | 0° |
| Cord Structure: | 3×(1+5)×0.25mm, 25 ends/50mm |

**Second Layer (0-degree Belt Layer)**

| | |
|---|---|
| Belt Width: | 75% of the tire total width W |
| Cord Angle: | 0°C |
| Cord Structure: | 3×(1+5)×0.25mm, 25 ends/50mm |

**Third Layer (Bias Belt Layer)**

| | |
|---|---|
| Belt Width: | 53% of the tire total width W |
| Cord Angle: | 50° (inclined left) |
| Cord Structure: | 3+9×0.22mm, 21 ends/50mm |

**Fourth Layer (Bias Belt Layer)**

| | |
|---|---|
| Belt Width: | 48% of the tire total width W |
| Cord Angle: | 50° (inclined right) |
| Cord Structure: | 3+9×0.22mm, 21 ends/50mm |

### [0045] (Example 2)

**First Layer (0-degree Belt Layer)**

| | |
|---|---|
| Belt Width: | 75% of the tire total width W |
| Cord Angle: | 0°C |
| Cord Structure: | 3×(1+5)×0.25mm, 25 ends/50mm |

**Second Layer (0-degree Belt Layer)**

| | |
|---|---|
| Belt Width: | 75% of the tire total width W |
| Cord Angle: | 0° |
| Cord Structure: | 3×(1+5)×0.25mm, 25 ends/50mm |

**Third Layer (Bias Belt Layer)**

| | |
|---|---|
| Belt Width: | 53% of the tire total width W |
| Cord Angle: | 50° (inclined left) |
| Cord Structure: | 3×+9×0.22mm, 21 ends/50mm |

**Fourth Layer (Bias Belt Layer)**

| | |
|---|---|
| Belt Width: | 48% of the tire total width W |
| Cord Angle: | 50° (inclined right) |
| Cord Structure: | 3+9×0.22mm, 21 ends/50mm |

**Fifth Layer (Bias Belt Layer)**

| | |
|---|---|
| Belt Width: | 29% of the tire total width W |
| Cord Angle: | 20° (inclined right) |
| Cord Structure: | 3×0.20mm+6×0.35mm, 15 ends/50mm |

### [0046] (Example 3)

**First Layer (0-degree Belt Layer)**

| | |
|---|---|
| Belt Width: | 75% of the tire total width W |
| Cord Angle: | 0° |
| Cord Structure: | 3×(1+5)×0.25mm, 25 ends/50mm |

**Second Layer (0-degree Belt Layer)**

| | |
|---|---|
| Belt Width: | two belt layers each with a belt width of 25% of the tire total width W being arranged horizontally with an interval of 27% of the tire total width W in between |
| Cord Angle: | 0° |
| Cord Structure: | 3×(1+5)×0.25mm, 25 ends/50mm |

**Third Layer (Bias Belt Layer)**

| | |
|---|---|
| Belt Width: | 53% of the tire total width W |
| Cord Angle: | 50° (inclined left) |
| Cord Structure: | 3+9×0.22mm, 21 ends/50mm |

**Fourth Layer (Bias Belt Layer)**

| | |
|---|---|
| Belt Width: | 48% of the tire total width W |
| Cord Angle: | 50° (inclined right) |
| Cord Structure: | 3+9×0.22mm, 21 ends/50mm |

### [0047] (Comparative Example 1)

**First Layer (Bias Belt layer)**

| | |
|---|---|
| Belt Width: | 68% of the tire total width W |
| Cord Angle: | 50° (inclined left) |
| Cord Structure: | 3+9×0.32mm, 21 ends/50mm |

**Second Layer (Bias Belt layer)**

| | |
|---|---|
| Belt Width: | 75% of the tire total width W |
| Cord Angle: | 20° (inclined right) |
| Cord Structure: | 3+9×0.32mm, 21 ends/50mm |

**Third Layer (Bias Belt layer)**

| | |
|---|---|
| Belt Width: | 71% of the tire total width W |
| Cord Angle: | 20° (inclined left) |
| Cord Structure: | 3+9×0.32mm, 21 ends/50mm |

**Fourth Layer (Bias Belt layer)**

| | |
|---|---|
| Belt Width: | 52% of the tire total width W |
| Cord Angle: | 20° (inclined right) |
| Cord Structure: | 3×0.20mm+6×0.35mm, 15 ends/50mm |

### (Comparative Example 2)

**First Layer (Bias Belt layer)**

| | |
|---|---|
| Belt Width: | 75% of the tire total width W |
| Cord Angle: | 20° (inclined left) |
| Cord Structure: | 3+9×0.32mm, 21 ends/50mm |

**Second Layer (0-degree Belt Layer)**

| | |
|---|---|
| Belt Width: | 64% of the tire total width W |
| Cord Angle: | 0° |
| Cord Structure: | 3×(1+5)×0.24mm, 21 ends/50mm |

**Third Layer (Bias Belt layer)**

| | |
|---|---|
| Belt Width: | 71% of the tire total width W |
| Cord Angle: | 20° (inclined right) |
| Cord Structure: | 3+9×0.32mm, 21 ends/50mm |

**Fourth Layer (Bias Belt layer)**

| | |
|---|---|
| Belt Width: | 52% of the tire total width W |
| Cord Angle: | 20° (inclined left) |
| Cord Structure: | 3+9×0.32mm, 21 ends/50mm |

The "indoor durability" and "partial-wear resistance" of each of the five types of tires were measured by the following test method. Results shown in Table 1 were obtained. It was proved that the durability and partial-wear resistance of each the tires as Examples 1 to 3 were improved in comparison with those of each of the tires as Comparative Examples 1 to 2.

### [Indoor Durability]

Firstly, each of the test tires was filled with an air pressure of 900kPa and subjected to a durability test specified in JIS D 4230, by use of a drum test machine with a drum diameter of 1707mm, and thereafter the travelling distance of the tire while running by increasing load by 10% in each 10 hours was measured until the tire was broken.

The result of evaluating each of the test tires was indexed while the traveled distance of the tire as Comparative Example 1 was indexed at 100. A larger index number means a better indoor durability.

### [Partial-wear Resistance]

The difference in abrasion loss between the tread center portion and the two end portions in each of the test tires was measured when the test tire attached to an actual vehicle completed a 5000-km run.

The result of evaluating each of the test tires was indexed by a reciprocal of the measured value, while the reciprocal of the value measured by the tire of Comparative Example 1 was indexed at 100. A larger index number means a better partial-wear resistance.

**[Table 1]**

| | Example 1 | Example 2 | Example 3 | Comparative Example 1 | Comparative Example 2 |
|---|---|---|---|---|---|
| Indoor Durability (Indices) | 110 | 130 | 110 | 100 | 105 |
| Partial-wear Resistance (Indices) | 110 | 120 | 105 | 100 | 95 |

### [0055] Example 4 & Comparative Example 3

Eight pneumatic radial tires for heavy duty which had the following configuration were produced. Their tire size was 275/70R22.5. They were provided with a carcass layer and steel cord belt layers including two plies of 0-degree belt layers and two plies of bias belt layers, as shown in Figs.3 and 4. The 0-degree belt layers were made of steel cords having a cord structure of 3×1+5(0.24) and a non-linear stress-strain relationship. The bias belt layers were made of steel cords having a cord structure of 3+9 (0.34) and the cord angle of 55° crossed over between two layers. The carcass layer was made of steel cords having a cord structure of 3+9+15(0.175)+1W.

A post-inflation process was applied to four tires among the eight tires. In the process, the four tires were assembled with rims within 5 minutes after removed from the curing molds, subsequently inflated by filling an air pressure of 900kPa, afterward, cooled down naturally by leaving in the atmosphere for two hours in the inflated condition.

As regards the four tires (as Example 4) to which the above described post-inflation process were applied and the other four tires (as Comparative Examples 3) to which no post-inflation process were applied, the "durability" according to the foregoing test method, and also the "growth of outside diameter while filled with inner pressure" and "driving stability" according to the following test method were measured. Thereby, results as shown in Table 2 were obtained.

### [Growth of Outside Diameter while Filled with Inner Pressure]

Each of the test tires was assembled with a rim, and filled with an air pressure as to be increased from 0kPa to 900kPa. The outside diameter of each of the test tires was measured at the inner pressure of 0kPa and 900kPa, respectively. And, the difference in the measured outside diameters (mm) between 0kPa and 900kPa was represented with an average of the differences concerning corresponding four test tires.

### [Driving Stability]

The test tires were attached to a bus whose axle type was 2-D. A test driver drove the bus to change lanes and turn corners repeatedly in a test course, and evaluated the responsiveness and driving stability by feeling to use a five-point method. The axial weight was set equal to weight distributed to the axle when the riding capacity of the bus were full, and the air pressure of the tires was set to the maximum standard load.

Evaluating results were indexed while the evaluation score given to Comparative Example 3 was indexed at 100. A larger index number means a better driving stability.

**[0061] [Table 2]**

| | Comparative Example 3 | Example 4 |
|---|---|---|
| Growth of outside diameter while filled with inner pressure (mm) | 8.0 | 5.5 |
| Durability (indices) | 100 | 115 |
| Driving Stability (indices) | 100 | 120 |

## Claims

1. A flat heavy-duty pneumatic radial tire, comprising:
at least one ply of a carcass layer (4) made of steel cords (4a); and
multiple plies of steel cord belt layers (6) arranged on the outer periphery of the carcass layer,
wherein the steel cord belt layers comprises:
at least one ply of a 0-degree belt layer (7), which is arranged immediately on the carcass layer and made of steel cords (7a) having a non-linear stress-strain relationship, an angle of the steel cords to the circumferential direction of the tire being substantially 0°; and
at least two plies of bias belt layers (8), which are arranged on the outer periphery of the 0-degree belt layer at a cord angle (α) to the circumferential direction of the tire of substantially equal to an equilibrium angle within a range of 45° to 65°, **characterised by** a protection belt layer (9) made of steel cords (9a) arranged on the outer periphery of the bias belt layers, in which protection belt layer a cord angle (β), to the circumferential direction of the tire, is 15° to 30°.

2. The flat heavy-duty pneumatic radial tire according to claim 1, wherein
the width (Wₒ) of the 0-degree belt layer is 75% to 85% of the total width (W) of the tire, and
the width (Wb) of the bias belt layer is narrower than that of the 0-degree belt layer, as well as 60% to 80% of the total width of the tire.

3. The flat heavy-duty pneumatic radial tire according to claim 2, wherein the width (Wp) of the protection belt layer is narrower than that of the bias belt layers, as well as 25% to 70% of the total width of the tire.

4. The flat heavy duty pneumatic radial tire according to any one of claims 1 to 3, wherein
two plies of the 0-degree belt layers, two plies of the bias belt layers and one ply of the protection belt layer are arranged.

5. The flat heavy-duty pneumatic radial tire according to any one of claims 1 to 4, wherein the aspect ratio of the tire is not more than 60%.

6. A method of manufacturing a flat heavy-duty pneumatic radial tire, comprising:
forming an uncured tire including: at least one ply of a carcass layer (4) made of steel cords (4a) and multiple plies of steel cord belt layers arranged on the outer periphery of the carcass layer, the steel cord belt layers including at least one ply of a 0-degree belt layer (7) arranged immediately on the carcass layer and made of steel cords (7a) having the non-linear stress-strain relationship and arranged at a cord angle to the circumferential direction of the tire of substantially 0°, and at least two plies of bias belt layers (8) arranged on the outer periphery of the 0-degree belt layer, a cord angle (α) to the circumferential direction of the tire being substantially equal to an equilibrium angle within a range of 45° to 65°, and a protection belt layer (9) made of steel cords (9a) arranged on the outer periphery of the belt bias layers, in which protection belt layer a cord angle (β), to the circumferential direction of the tire, is 15° to 30°;
curing the uncured tire in a mold;
removing the resultant cured tire from the mold;
assembling the cured tire with a rim (R) to be inflated while the tire is in high temperature; and
cooling the cured tire down to normal temperature in a condition of being inflated.

7. The method of manufacturing a flat heavy-duty pneumatic radial tire according to claim 6, wherein the cured tire removed from the mold is assembled with the rim while the temperature of the tire is kept not lower than 110°C.

8. The method of manufacturing a flat heavy-duty pneumatic radial tire according to any one of claims 6 and 7, wherein an air pressure used when the tire is assembled with the rim to be inflated is equal to an air pressure corresponding to a maximum load capability specified in JATMA YEAR BOOK 2004.

9. The method of manufacturing a flat heavy-duty pneumatic radial tire according to any one of claims 6 to 8, wherein the steel cords having the non-linear stress-strain relationship possess a border between a low stress range and an intermediate to high stress range within a strain of 0.5% to 1.0%.

10. The method of manufacturing a flat heavy-duty pneumatic radial tire according to any one of claims 6 to 9, wherein the 0-degree belt layer is arranged immediately on the carcass layer.

## Patentansprüche

1. Flacher pneumatischer radialer Schwerlastreifen, der umfasst:
wenigstens eine Lage einer Karkassenschicht (4), die aus Stahlkorden (4a) gefertigt ist; und
mehrere Lagen von Stahlkordgürtelschichten (6), die auf dem äußeren Umfang der Karkassenschicht angeordnet sind,
bei dem die Stahlkordgürtelschichten umfassen:
wenigstens eine Lage einer 0-Grad-Gürtelschicht (7), die unmittelbar auf der Karkassenschicht angeordnet ist und aus Stahlkorden (7a) gefertigt ist, die ein nicht lineares Spannungs-Dehnungs-Verhältnis aufweisen, wobei ein Winkel der Stahlkorde zur Umfangsrichtung des Reifens im Wesentlichen 0° beträgt; und
wenigstens zwei Lagen von Neigungsgürtelschichten (8), die an dem Außenumfang der 0-Grad-Gürtelschicht in einem Kordwinkel (α) zur Umfangsrichtung des Reifens von im Wesentlichen gleich einem Ausgleichswinkel in einem Bereich von 45° bis 65° angeordnet sind,
**gekennzeichnet durch** eine Schutzgürtelschicht (9), die aus Stahlkorden (9a) gefertigt ist, die an dem Außenumfang der Neigungsgürtelschichten angeordnet sind, wobei bei der Schutzgürtelschicht ein Kordwinkel (β) zur Umfangsrichtung des Reifens 15° bis 30° beträgt.

2. Flacher pneumatischer radialer Schwerlastreifen nach Anspruch 1, bei dem
die Breite (W₀) der 0-Grad-Gürtelschicht 75% bis 85% der Gesamtbreite (W) des Reifens beträgt, und
die Breite (Wb) der Neigungsgürtelschicht sowohl schmaler als die der 0-Grad-Gürtelschicht ist als auch 60% bis 80% der Gesamtbreite des Reifens beträgt.

3. Flacher pneumatischer radialer Schwerlastreifen nach Anspruch 2, bei dem die Breite (Wp) der Schutzgürtelschicht sowohl schmaler als die der Neigungsgürtelschichten ist als auch 25% bis 70% der Gesamtbreite des Reifens beträgt.

4. Flacher pneumatischer radialer Schwerlastreifen nach einem der Ansprüche 1 bis 3, bei dem
zwei Lagen von 0-Grad-Gürtelschichten, zwei Lagen von Neigungsgürtelschichten und eine Lage der Schutzgürtelschicht vorgesehen sind.

5. Flacher pneumatischer radialer Schwerlastreifen nach einem der Ansprüche 1 bis 4, bei dem das Aspektverhältnis des Reifens nicht mehr als 60% beträgt.

6. Verfahren zur Herstellung eines flachen pneumatischen radialen Schwerlastreifens, das umfasst:
Ausbilden eines ungehärteten Reifens, der enthält: wenigstens ein Lage einer Karkassenschicht (4), die aus Stahlkorde (4a) gefertigt ist, und mehrere Lagen von Stahlkordgürtelschichten, die an dem Außenumfang der Karkassenschicht angeordnet sind, wobei die Stahlkordgürtelschichten wenigstens eine Lage einer 0-Grad-Gürtelschicht (7), die unmittelbar auf der Karkassenschicht angeordnet ist und aus Stahlkorden (7a) gefertigt ist, die ein nicht lineares Spannungs-Dehnungs-Verhältnis aufweisen und in einem Kordwinkel zur Umfangsrichtung des Reifens von im Wesentlichen 0° angeordnet sind, und wenigstens zwei Lagen von Neigungsgürtelschichten (8), die an dem Außenumfang der 0-Grad-Gürtelschicht angeordnet sind, wobei ein Kordwinkel (α) zur Umfangsrichtung des Reifens im Wesentlichen gleich einem Ausgleichswinkel in einem Bereich von 45° bis 65° ist, und eine Schutzgürtelschicht (9) enthalten, die aus Stahlkorden (9a) gefertigt ist, die an dem Außenumfang der Neigungsgürtelschichten angeordnet sind, wobei die Schutzgürtelschicht einen Kordwinkel (β) zur Umfangsrichtung des Reifens von 15° bis 30° aufweist;
Aushärten des ungehärteten Reifens in einer Form;
Entfernen des resultierenden ausgehärteten Reifens aus der Form;
Aufziehen des ausgehärteten Reifens auf eine Felge (R), der aufzupumpen ist, wobei der Reifen sich auf einer hohen Temperatur befindet; und
Abkühlen des ausgehärteten Reifens auf Normaltemperatur in einem aufgepumpten Zustand.

7. Verfahren zur Herstellung eines flachen pneumatischen radialen Schwerlastreifens nach Anspruch 6, bei dem der ausgehärtete Reifen, der aus der Form entfernt ist, auf die Felge aufgezogen wird, während der Reifen auf einer Temperatur von nicht weniger als 110°C gehalten wird.

8. Verfahren zur Herstellung eines flachen pneumatischen radialen Schwerlastreifens nach Anspruch 6 oder 7, bei dem ein Luftdruck, der verwendet wird, wenn der aufzupumpende Reifen auf die Felge aufgezogen wird, gleich einem Luftdruck entsprechend einer Maximallastfähigkeit ist, die in JATMA YEAR BOOK 2004 spezifiziert ist.

9. Verfahren zur Herstellung eines flachen pneumatischen radialen Schwerlastreifens nach einem der Ansprüche 6 bis 8, bei dem die Stahlkorde, welche das nicht lineare Spannungs-Dehnungs-Verhältnis aufweisen, eine Grenze zwischen einem niedrigen Spannungsbereich und einem mittleren bis hohen Spannungsbereich bei einer Dehnung von 0,5% bis 1,0% besitzt.

10. Verfahren zur Herstellung eines flachen pneumatischen radialen Schwerlastreifens nach einem der Ansprüche 6 bis 9, bei dem die 0-Grad-Gürtelschicht unmittelbar auf der Karkassenschicht angeordnet ist.

## Revendications

1. Bandage pneumatique radial plat pour fortes charges, comprenant:
au moins une nappe d'une couche de carcasse (4) réalisée en cordes d'acier (4a); et
de multiples nappes de couches de ceinture en cordes d'acier (6) agencées sur la périphérie extérieure de la couche de carcasse,
où les couches de ceinture en cordes d'acier comprennent:
au moins une nappe d'une couche de ceinture à 0-degré (7), qui est agencée directement sur la couche de carcasse et est réalisée en cordes d'acier (7a) ayant une relation de contraintes-déformations non-linéaire, un angle des cordes en acier à la direction circonférentielle du bandage étant sensiblement de 0°; et
au moins deux nappes de couches de ceinture en biais (8) qui sont agencées sur la périphérie extérieure de la couche de ceinture à 0-degré selon un angle de corde (α) à la direction circonférentielle du bandage sensiblement égal à un angle d'équilibre dans une plage de 45° à 65°,
**caractérisé par** une couche de ceinture de protection (9) réalisée en cordes d'acier (9a) agencées sur la périphérie extérieure des couches de ceinture en biais, couche de ceinture de protection dans laquelle un angle de corde (β), à la direction circonférentielle du bandage, est de 15° à 30°.

2. Bandage pneumatique radial plat pour fortes charges selon la revendication 1, dans lequel la largeur (Wₒ) de la couche de ceinture à 0-degré est de 75% à 85% de la largeur totale (W) du bandage, et
la largeur (Wb) de la couche de ceinture en biais est plus étroite que celle de la couche de ceinture à 0-degré, ainsi que 60% à 80% de la largeur totale du bandage.

3. Bandage pneumatique radial plat pour fortes charges selon la revendication 2, dans lequel la largeur (Wp) de la couche de ceinture de protection est plus étroite que celle des couches de ceinture en biais, ainsi que 25% à 70% de la largeur totale du bandage.

4. Bandage pneumatique radial plat pour fortes charges selon l'une quelconque des revendications 1 à 3, dans lequel
deux nappes de couches de ceinture à 0-degré, deux nappes des couches de ceinture en biais et une nappe de la couche de ceinture de protection sont agencées.

5. Bandage pneumatique radial plat pour fortes charges selon l'une quelconque des revendications 1 à 4, dans lequel le rapport d'aspect du bandage n'est pas supérieur à 60%.

6. Procédé de fabrication d'un bandage pneumatique radial plat pour fortes charges, comprenant:
former un bandage non-vulcanisé comportant: au moins une nappe d'une couche de carcasse (4) réalisée en cordes d'acier (4a) et de multiples nappes de couches de ceinture en cordes d'acier agencées sur la périphérie extérieure de la couche de carcasse, les couches de ceinture en cordes d'acier incluant au moins une nappe d'une couche de ceinture à 0-degré (7) agencée immédiatement sur la couche de carcasse et réalisée en cordes d'acier (7a) ayant la relation des contraintes-déformations non-linéaire et agencée selon un angle de corde à la direction circonférentielle du bandage de sensiblement 0-degré, et au moins deux nappes de couches de ceinture en biais (8) agencées sur la périphérie extérieure de la couche de ceinture à 0-degré, un angle de corde (α) à la direction circonférentielle du bandage étant sensiblement égal à un angle d'équilibre dans une plage de 45° à 65°, et une couche de ceinture de protection (9) réalisée en cordes d'acier (9a) agencée sur la périphérie extérieure des couches de ceinture en biais, couche de ceinture de protection dans laquelle un angle de corde (β) à la direction circonférentielle du bandage, est de 15° à 30°;
vulcaniser le bandage non vulcanisé dans un moule;
retirer le bandage vulcanisé obtenu du moule;
assembler le bandage vulcanisé avec une jante (R) à gonfler pendant que le bandage se trouve à température élevée; et
refroidir le bandage vulcanisé à la température normale dans une condition de gonflage.

7. Procédé de fabrication d'un bandage pneumatique radial plat pour fortes charges selon la revendication 6, dans lequel le bandage vulcanisé retiré du moule est assemblé avec la jante pendant que la température du bandage est maintenue à un degré non inférieur à 110°C.

8. Procédé de fabrication d'un bandage pneumatique radial plat pour fortes charges selon l'une quelconque des revendications 6 et 7, dans lequel une pression d'air utilisée lorsque le bandage est assemblé avec la jante à gonfler est égale à une pression d'air correspondant à une capacité de charge maximale spécifiée dans JATMA YEAR BOOK 2004.

9. Procédé de fabrication d'un bandage pneumatique radial pour fortes charges selon l'une quelconque des revendications 6 à 8, dans lequel les cordes en acier ayant la relation des contraintes-déformations non-linéaire possède une limite entre une plage de contraintes basse et une plage de contraintes intermédiaire à élevée dans une déformation de 0,5% à 1,0%.

10. Procédé de fabrication d'un bandage pneumatique radial plat pour fortes charges selon l'une quelconque des revendications 6 à 9, dans lequel la couche de ceinture à 0-degré est agencée directement sur la couche de carcasse.
